# EUROPEAN PATENT APPLICATION

(11) **EP 2 266 926 A1**
(43) Date of publication of application: **29.12.2010**
(21) Application number: 09725411.4
(22) Date of filing: 23.03.2009
(51) Int. Cl.: C04B 7/36, B02C 7/10

(54) **METHOD FOR MECHANICALLY ACTIVATING CEMENT AND A MECHANICAL CEMENT ACTIVATOR**

(30) Priority: 28.03.2008 RU 2008113236
(71) Applicant: Obschestvo S Ogranichenoy Otvetstvennostyu "MONOLIT", Leningradskaya obl. 188490 (RU)
(72) Inventor: OLKHOVSKY, Eduard Vasilievich, St.Petersburg 190000 (RU)
(74) Representative: Jeck, Anton
(86) International application number: PCT/RU2009/000144
(87) International publication number: WO 2009/120115

(57) **Abstract**

The invention relates to the cement production, in particular to increasing concrete strength and reducing cement consumption. The technical result consists in the possibility of providing a specified fineness of grinding, a sufficient monodispersion, preventing the cement from aggregating and increasing the reliability and the service life of a mechanical activator. The cement is ground and mechanical activated in vortex flows with a speed of rotation of 100 000-300 000 revolutions per minute by means of the impact action produced by the collision of deorbited particles, the particle breakage by centrifugal forces, the supersaturation of particles with static electricity and local heating up to 1200°C in association with the prevention of cement aggregation. During cement processing, additives, substantially nanocomposite additives are introduced. The cement mechanical activator comprises a body (1), a frame (2), electric motors (3) with hollow shafts for supplying a cement and air, discs (4) which oppositely rotate with the same speed and are provided with washers (6) for adjusting the gap therebetween and a system (7) for controlling the grinding parameters. A boundary layer for protecting the discs (4) against abrasion wear and oppositely rotating vortex flows, in which the cement particles captured thereby rotate, are formed between the discs with the aid of air.

## Description

The solution concerns cement manufacturing, namely increasing concrete durability while lowering cement consumption.

Russia produces 45 million tons of cement a year, worldwide - 1.9 billion tons a year, the demand is annually rising. Lenstroydetal is willing to purchase 18 mechanical activator units only by itself. Saint- Petersburg including its region have 1500 concrete ready-mix stations. Russia requires 30-40 thousands of mechanical activator units a year.

An outstanding Soviet scientist I.A.Hint mentioned:

We have the right to say that the forth technology component has been developed - activation of substances by means of large mechanical energies. Along with three existing technologies: temperature and pressure alteration, dispergation and catalysys - this technology becomes equally important and effective.

Several years ago large mechanical energies received wide industrial application used during manufacturing of a new artificial stone - laprex, a backfill high-quality cement used for reinforcing deep bore holes, which is also used during manufacturing of carbonate fertilizers from lime pit waste and waste flour.

Considering the above we found rational to name the new technological complex UDA-technology. U - universal, D - desintegrator, A - activator. The new technology is universal without a doubt. We feel that the word "desintegrator" should remain in the new technology title in despite the fact that the units currently manufactured by Special design-engineering centre "Dezintegrator" only remotely resemble a disintegrator invented by engineer Karr in 1859. Activation as described above is the main part of the new technology.

Activation occurs not only during sand disintegration, but other substances too. Here are some examples:
- The phospharite powder processed in a UDA-unit is much better fixated by the plants, than the powder milled to maximum degree of fineness in a barrel mill as well as increase in effectiveness of phospharite flour as a fertilizer by tens of percents. A research using tagged atoms showed that fixation of phosphorus by plants has increased by several times:
- When grinding the same clinker in a barrel mill and in UDA-unit to the same degree of fineness, in the latter case a portland cement of a higher quality can be received, which in 16 days allows to receive the durability of products that the cement grinded in the barrel mill would receive in 28 days. Final strength of the of disintegrated cements is up to 40% higher, depending on the clinker structure;
- The UDA-technology used in preparing of special grouting mixtures for reinforcing bore hole walls during oil and gas recovery allows to increase tension capacity of cement by up to 5 times compared to previously used mixtures and to reduce the cost of each bore hole by not less than by 100 thousand roubles;
- Activation of drill fluids in UDA-unit allows to increase drilling rate by about 20-25 %, reduce amount of solids in the solution by 2.0-2.5 times and reduce drill-gage wear;
- Production of silicalcite utilizing UDA-technology (which in western countries is known as "laprex") allows manufacturing an artificial stone of a much better quality than before, which is also 2 times cheaper with power consumption decrease of approximately 50 %. This type of silicalcite is several times more resistant to corrosive action than silicalcite manufactured using barrel mill:
- Preparing glass mixes and fluxes in UDA-unit allows to lower the fusing or burning temperature by 20°C, increase the process speed and improve the product quality;
- Experiments conducted in Dnepropetrovskiy metallurgical institute have shown that preliminary treatment of iron ore in UDA-unit allows to lower metal reduction by 100°C and to lower the processing time by 20 % in comparison with ore grinded to the same fineness in a barrel mill;
- Processing of tungstic concentrate in UDA-unit (scheelite, wolframite) allows increasing degree of metal extraction by 10 % and increasing the speed of subsequent hydrothermal processing by 15-20 %:
- Processing of copper and iron-ore concentrates together with binding (CaO) allows increasing pellet durability by 25-35 %:
- Processing of SiO₂ in UDA-unit increases its adsorption ability that is used for radioactive caesium extraction from sewers:
- Processing of starch-containing products in UDA-unit for spirit production reduces attenuation time by 20 % and increases the amount of spirits output;
- Processing of water-oil mixes in UDA-unit allows increasing caloricity by 5-7 %; preparation of water fuel emulsions and suspensions in UDA-unit allows increasing engine efficiency, improving working conditions and provides increased fuel combustion:
- Activation of culture mediums in UDA-unit for microorganisms' cultivation increases its rate by 15-25 %;
- UDA-technology for carbonate fertilizers increases yielding capacity by 3-5 % because of better fertilizer accessibility, lower the price by 3 roubles per 1 ton and save up to 10 kg of fuel;
- UDA-technology for water activation increases plant growth by 30-40 %, animals by 20 % on average, fishes - 45-100 %, increases plants resistance to extreme conditions: low temperatures, lack of watering, on average by 20%. Also with a daily additive of water activated in UDA-unit in amounts of 10 ml per 1 kg of weight for some animals leads to additional weight gain of 20 % with identical controlled diet;
- UDA-technology for processing of rubber, fiberglass plastic, and fiberglass allows extracting of a valuable powder product used as polymer filler. And that is while the two latter types of waste do not have any industrial recycling methods in the world;
- If UDA-unit is used instead of a KDM-0,2 hammer grinder when processing feed compound then a noticeable gain in energy saving and working costs decrease on tens of percents can be achieved;
- Protein concentrate preparation using UDA-technology allows increasing cellular fluid output by approximately 2 times.

It is possible to add many more similar examples. But the above information can already contradict a widely spread belief that in terms of technology the device or method used for reaching the specified degree of fineness is not important.

But as grinding in vibrating and barrel mills the mechanical activation is always mentioned, the effect reached in disintegrator is named as activation using large mechanical energies. The impact velocity during substance disintegration is by at least an order greater, than in vibrating and barrel mills, and acceleration (at elastic collision) reaches millions of gravity accelerations (1).

It was noted that substance particles in disintegrator received 6 rapid impacts following each other, at maximum impact speed of 250 m/sec, sand-lime mixes received absolutely distinct compounding properties (2).

A working hypothesis has been brought forward combining main principles of disintegrator construction with activation process arising in substances, namely: the more the amount of impacts received by substance particles, the more the impact velocity, and the lesser the interval between the subsequent impacts, the greater the activity (1).

There are also many types of mechanical activators of cement large part of which is of impact type.

The most similar mechanical activator (UDA-unit) compared to the stated one is the device having the body, frame, electric motor and working element in the shape of rotors rotating in opposite directions, processing the material in intervals of impact velocities of up to 450 m/s
(1, p. 9). This does not allow reaching high grinding rates, namely fineness of grinding, high monodispersion, and most important cement aggregation ability.
The point of the engineering solution is to maintain the required grinding fineness (dispersion), sufficient monodispersion and cement aggregation.

The point of the engineering solution is to develop a working mechanical activator for cement with high reliability and durability.
This method for grinding and mechanical activation of cement is different due to processing carried out in vortex flows with velocity of 100000-3000000 rpm also due to the impact effect of particles colliding when losing orbit, due to particle breakage under the influence of centrifugal forces, due to supersaturation of particles with electrostatic electricity and because of local pulse heating up to 1200 degrees Celsius with capability to prevent cement aggregation, while the processing is being performed using electrostatic electricity.

The method is different in a way that it uses activating disks, while a boundary layer is created due to air formed from disk rotation in the space between activating disks rotating in opposite directions, that is protecting disks from abrasive wear, including vortex flows rotating in opposite directions in which captured cement particles rotate.

The method is different in a way that during cement processing additives (mainly nanocomposite) are being added.
Cement mechanical activator, including body, frame, electric motor and working element is defined by a working element that is implemented as two disks rotating with similar speeds in opposite directions, electric motors have hollow shafts for cement and air feeding, disks are equipped with spacers for adjusting openings between them, and a grinding parameters control system is available.
Mechanical activator is defined by disks that can have synchronous (located opposite to each other) round fluting of oval or round form and asynchronous (located with displacement to each other) round fluting of oval or round form.
Mechanical activator is defined by disks that while having a diameter of 1200 mm can have rotational velocity of 1500 rpm.
Mechanical activator is defined by disks that while having an option of increasing electrostatic electricity activity are fully or partey covered with dielectric material, for example - glass, or can be made of a dielectric material.

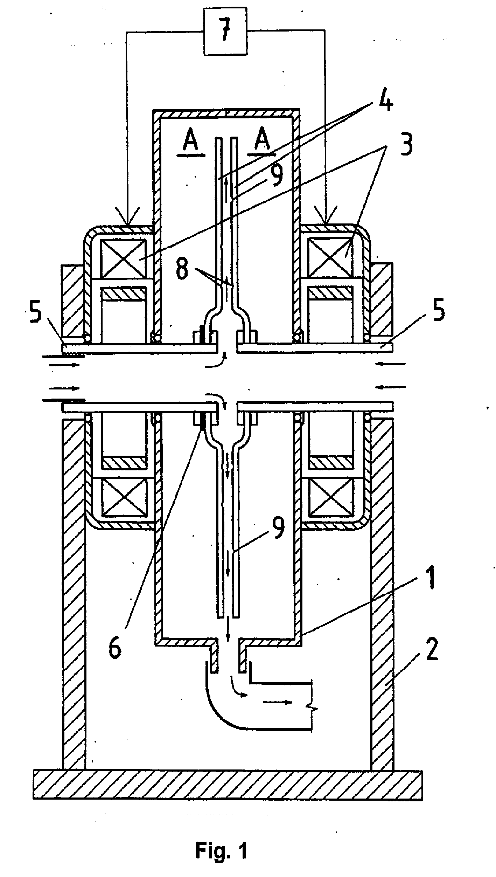

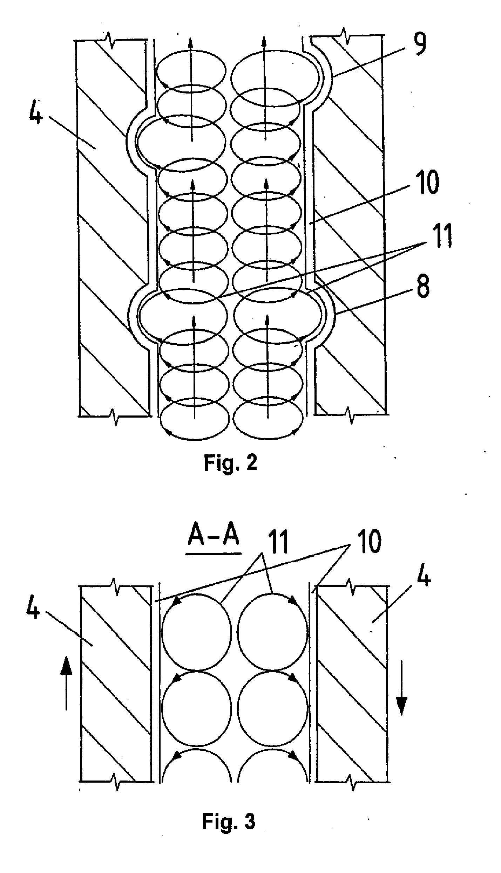

The proposed mechanical activator is illustrated in the figures: fig.l - the general layout of a mechanical activator. fig. 2, 3 - mechanical activator fragments which show the vortex flows.

The proposed mechanical activator and methods of use have grinding performed in fast vortex flows with velocities of 100000 - 3000000 rpm due to the impact effect of particles colliding when losing orbit, due to particle breakage under the influence of centrifugal forces, due to supersaturation of particles with electrostatic electricity and because of local pulse heating up to 1200 degrees Celsius. Almost all particles are saturated with electrostatic electricity and it does not allow them to be aggregated which is very important for further uniform hydration of binding substance.

The proposed mechanical activator consists of the body 1, a frame 2, electric motors 3, activating disks 4, electric motors hollow shafts 5, spacers for opening adjustment between disks 6, grinding parameters control systems 7. Activating disks 4 can have synchronous (located opposite to each other) round fluting of oval or round form 8 and asynchronous (located with displacement to each other) round fluting of 9 oval or round forms.

Disks 4 while having a diameter of 1200 mm can have rotational velocity of 1500 rpm, which provides high reliability and service life of not less than two years.

Mechanical activator of cement functions as follows: through a hollow shaft 5 of electric motors 3 cement and air are being fed, which then under the effect of centrifugal forces are transferred to a space between rotating disks 4, with a purpose to increase the activity of electrostatic electricity disks 4 are fully or party covered with dielectric material, for example - glass, or can be made of a dielectric material.

### (figs. 1).

Fig.2. 3. In a space between activating disks 4 rotating in opposite directions a boundary layer 10 is created using air, formed due to disks rotation and protecting disks from abrasive wear and oppositely rotating vortex flows 11 which contain captured cement particles. As the vortex flow velocity can reach 2000 000 rpm, the captured cement particles loose orbit and hitting the opposite vortex stream meet other particles and blow up. Vortex flows 11 are formed at disks 4 that are rotating forming opposite flows due to opposite rotation of disks 4. Scattering fragments also initiate grinding in other vortex flows, and so the process of vortex flows 11 movement is performed radially and repeatedly. Cement grinding also occurs under the influence of centrifugal forces and due to cracking under the influence of local heating as a result of opposite vortex flow contact 11. Instant heating can have an pulse temperature of up to 1200 degrees Celsius which causes cement particles cracking.

High speed of vortex flows rotation in the dielectric area causes supersaturation of cement particles with electrostatic electricity leading to explosion and grinding. The cement particles saturated with electrostatic electricity bounce off of each other therefore the activated cement is not aggregated till the moment of electrostatics expiration.

In actual practice the process lasts 5 minutes or more which is quite enough for mixing of concrete and uniform hydration of binding substance, namely cement. The grinding process can be controlled by means of a grinding parameters control system 7. circumferential velocity of counter rotating disks 4 should be identical - this condition which does not allow for wearing is carried out by the control system 7 which controls the rotation of collectorless pulsed electric motors 3. Besides, the rotation velocity of disks 4, leads to coarse grinding, while an increase in rotation velocity of disks 4 leads to finer grinding. The grinding can also be adjusted assuming identical disk 4 velocity by lowering the opening between disks 4 using of adjustment spacers 6 (grinding becomes more fine). Grinding is also controlled by means of synchronous round fluting 8 or asynchronous round fluting 9 where increasing distance between disks drastically increases the diameter of vortex flows 11 that leads to captured cement particles to loose their orbit, and initiating grinding by means of impacts and centrifugal forces.

Processing is carried out in vortex flows of 100000-3000000 rpm.

The following result was achieved - concrete durability increase of 1,7 times while lowering cement consumption by 15-20%. Currently there is no scientific approach for parameter determination that is why parameters optimization for mechanical activator has been reached in a practical way - using iterations method.

Mechanical activator allows proportioning nanocomposite additives according to volume, such as fullerene type additives, while also activating them. Currently this is the main problem for their effective use.

The proposed cement mechanical activator without any problems can be incorporated into concrete or mortar mixing station as a part of cement feeding system.

Cement mechanical activator allows:
- To reduce cement consumption by 15-25 %,
- To increase concrete durability by 1,5 - 2,5 times
- To reduce concrete primary crystallization to 4-6 hours, that is 4-6 times less,
- To reach fraction monodispertion of 0,5-10 micron 45-50 %,
- To use mechanical activator in other branches of technology.

There is an option to effectively use nanocomposite additives by proportionally mixing and activating them.

### Sources of information.

1. I. Hint. «UDA-technology: problems and perspectives». Tallinn, 1981. page 4.
2. Hint I.A., «Silicalcite products manufacturing basics», L., Gosstroy, 1962. page 10.

## Claims

1. Method for grinding and mechanical activation of cement that is different due to processing carried out in vortex flows with velocity of 100000-3000000 rpm due to the impact effect of particles colliding when losing orbit, due to particle breakage under the influence of centrifugal forces, due to supersaturation of particles with electrostatic electricity and because of local pulse heating up to 1200 degrees Celsius with capability to prevent cement aggregation, while the processing is being performed using electrostatic electricity.

2. Method according to claim 1 is different in a way that it uses activating disks, while a boundary layer is created due to air formed from disk rotation in the space between activating disks rotating in opposite directions, that is protecting disks from abrasive wear, including vortex flows rotating in opposite directions in which captured cement particles rotate.

3. Method according to claim 1 is different in a way that during cement processing additives (mainly nanocomposite) are being added.

4. Cement mechanical activator, including body, frame, electric motor and working element is defined by a working element that is implemented as two disks rotating with similar speeds in opposite directions, electric motors have hollow shafts for cement and air feeding, disks are equipped with spacers for adjusting openings between them, and a grinding parameters control system is available.

5. Mechanical activator according to claim 4 is defined by disks that can have synchronous (located opposite to each other) round fluting of oval or round form and asynchronous (located with displacement to each other) round fluting of oval or round form.

6. Mechanical activator according to claim 4 is defined by disks that while having a diameter of 1200 mm can have rotational velocity of 1500 rpm.

7. Mechanical activator according to claim 4 is defined by disks that while having an option of increasing electrostatic electricity activity are fully or partey covered with dielectric material, for example - glass, or can be made of a dielectric material.
